# EUROPEAN PATENT APPLICATION

(11) **EP 4 712 296 A1**
(43) Date of publication of application: **18.03.2026**
(21) Application number: 24819437.5
(22) Date of filing: 10.01.2024
(51) Int. Cl.: H02J 7/00, H02J 9/00, H01M 10/44, H01M 10/42

(54) **CELL BALANCING METHOD AND BATTERY SYSTEM EMPLOYING SAME**

(30) Priority: 09.06.2023 KR 20230074193
(71) Applicant: LG Energy Solution, Ltd., Seoul 07335 (KR)
(72) Inventor: CHOI, Jang Hyeok, Daejeon 34122 (KR); KIM, Kyeongmin, Daejeon 34122 (KR)
(74) Representative: Plasseraud IP
(86) International application number: PCT/KR2024/000475
(87) International publication number: WO 2024/253283

(57) **Abstract**

The present invention relates to a cell balancing method and a battery system employing same. The battery system of the present invention comprises: a battery including a plurality of battery cells; a monitoring unit for performing a first low-power mode and a second low-power mode, wherein, in the first low-power mode, wakeup is executed every short term period and cell balancing is performed on each of the plurality of battery cells on the basis of a predetermined first cell balancing execution condition, and in the second low-power mode, if a period extension condition is satisfied, wakeup is executed every long term period that is longer than the short term period by a predetermined period, and cell balancing is performed on each of the plurality of battery cells on the basis of a second cell balancing execution condition; and a control unit for, if a low-power mode entry condition is satisfied, indicating the monitoring unit to enter the first low-power mode, and then entering a sleep mode in which a preconfigured operation is not performed.

## Description

### [Technical Field]

### CROSS-REFERENCE TO RELATED APPLICATION

This application claims priority to and the benefit of Korean Patent Application No. 10-2023-0074193 filed in the Korean Intellectual Property Office on June 09, 2023, the entire contents of which are incorporated herein by reference.

The present disclosure relates to a cell balancing method and a battery system providing the same.

### [Background Art]

Battery cell balancing may be a method of reducing a voltage difference between a plurality of cells that occurs during a charge/discharge voltage behavior of the plurality of cells connected in series with each other. A circuit capable of discharging the plurality of cells may be implemented in a battery management system (BMS). For example, passive cell balancing may be a method of reducing the voltage difference between a higher voltage cell and a lower voltage cell by discharging the higher voltage cell for a certain period. For another example, active cell balancing may be a method of reducing the voltage difference between the plurality of cells by supplying power of the higher voltage cell to the lower voltage cell.

However, a battery may be charged using an external power source or an upper system mounted with the battery may not be operated. In this case, the BMS may be in a sleep mode or a shut down mode to fail to perform the cell balancing, thus increasing the voltage difference between the plurality of cells.

### [Disclosure]

### [Technical Problem]

The present disclosure attempts to provide a cell balancing method which may reduce a voltage difference between a plurality of battery cells by using less power even in a sleep mode or a shut down mode, and a battery management system providing the same.

### [Technical Solution]

According to an embodiment, provided is a battery system including: a battery including a plurality of battery cells; a monitoring unit waking up at every short cycle and performing a first low power mode where cell balancing is performed for each of the plurality of battery cells based on a predetermined first cell balancing performance condition, and waking up at every long cycle that is longer than the short cycle by a predetermined period and performing a second low power mode where the cell balancing is performed for each of the plurality of battery cells based on a second cell balancing performance condition when a period extension condition is satisfied; and a control unit instructing the monitoring unit to enter the first low power mode, and then entering a sleep mode where no predetermined operation is performed when a condition for entering the low power mode is satisfied.

The monitoring unit may accumulate a first count without performing the cell balancing for the plurality of battery cells when the first cell balancing performance condition or the second cell balancing performance condition is not satisfied, and perform the cell balancing for the battery cell requiring the cell balancing among the plurality of battery cells and accumulates a second count when the first cell balancing performance condition or the second cell balancing performance condition is satisfied.

The period extension condition may be a condition where the accumulated count of the first counts is more than a first reference value.

The condition for entering the low power mode may include at least one of entry to a charge mode where the battery is charged with power from an external device and entry to an operation stop mode where an operation of an upper system mounted with the battery is stopped.

The control unit may transmit the short cycle, the first cell balancing performance condition, the long cycle, and the second cell balancing performance condition to the monitoring unit to instruct its entry to the first low power mode, and then enter the sleep mode or a shut down mode where the control unit receives no drive power when the condition for entering the low power mode is satisfied.

The monitoring unit may wake up the control unit and end the first low power mode or the second low power mode when at least one of a first condition where a cell voltage of at least one battery cell among the plurality of battery cells falls to a discharge lower limit voltage or less and a second condition where the accumulated count of the second counts is more than a predetermined second reference value is satisfied.

The monitoring unit may change from the second low power mode to the first low power mode when a period reduction condition where the accumulated count of the first and second counts is more than a third reference value is satisfied.

According to another embodiment, provided is a cell balancing method including: receiving an instruction for entry to a first low power mode from a control unit before the control unit enters a sleep mode where the control unit performs no predetermined operation when a condition for entering a low power mode is satisfied; waking up at every short cycle and performing a first low power mode where cell balancing is performed for each of the plurality of battery cells based on a first cell balancing performance condition; and waking up at every long cycle that is longer than the short cycle by a predetermined period and performing a second low power mode where the cell balancing is performed for each of the plurality of battery cells based on a second cell balancing performance condition when a period extension condition is satisfied.

The performing of the first low power mode may include: waking up the monitoring unit and determining whether the first cell balancing performance condition is satisfied when the short cycle arrives; adding a first count corresponding to the number of times the cell balancing is not performed when the first cell balancing performance condition is not satisfied as a determination result; performing the cell balancing for the battery cell requiring the cell balancing among the plurality of battery cells and adding a second count corresponding to the number of times the cell balancing is performed when the first cell balancing performance condition is satisfied as the determination result; and determining whether the period extension condition, which is a condition where the accumulated count of the first counts is more than a first reference value, is satisfied, and entering the performing of the second low power mode when the period extension condition is satisfied as the determination result.

When the period extension condition is not satisfied as the determination result, the method may further include: determining whether at least one of a first condition where a cell voltage of at least one battery cell among the plurality of battery cells falls to a discharge lower limit voltage or less and a second condition where the accumulated count of the second counts is more than a second reference value is satisfied; and waking up the control unit and ending the first low power mode when at least one of the first condition and the second condition is satisfied as the determination result.

The performing of the second low power mode may include: waking up the monitoring unit and determining whether the second cell balancing performance condition is satisfied when the long cycle arrives; adding the first count when the second cell balancing performance condition is not satisfied as the determination result; performing the cell balancing for the battery cell requiring the cell balancing among the plurality of battery cells and adding the second count when the second cell balancing performance condition is satisfied as the determination result; and determining whether a period reduction condition where the total accumulated count of the first and second counts is more than a third reference value is satisfied, and the method may enter the performing of the first low power mode when the period reduction condition is satisfied as the determination result.

Before the determining of whether the period reduction condition is satisfied, the method may further include: determining whether at least one of a first condition where a cell voltage of at least one battery cell among the plurality of battery cells falls to a discharge lower limit voltage or less and a second condition where the accumulated count of the second counts is more than a predetermined second reference value is satisfied; and waking up the control unit and ending the second low power mode when at least one of the first condition and the second condition is satisfied as the determination result.

The condition for entering the low power mode may include at least one of entry to a charge mode where the battery is charged with power from an external device and entry to an operation stop mode where an operation of an upper system mounted with the battery is stopped.

### [Advantageous Effects]

The present disclosure may reduce the voltage difference between the plurality of cells by waking up at every predetermined cycle and performing the cell balancing even when the battery management system (hereinafter, "BMS") is in the sleep mode or the shut down mode.

The present disclosure may save the power consumption of the battery management system (BMS) because the wake-up cycle of the monitoring unit may be adjusted to the short cycle or the long cycle based on states of the plurality of cells.

### [Description of the Drawings]

FIG. 1 is a block diagram explaining a battery system according to an embodiment.
FIG. 2 is a flowchart explaining a cell balancing method according to another embodiment.
FIG. 3 is a flowchart specifically explaining a first low power mode of FIG. 2.
FIG. 4 is a flowchart specifically explaining a second low power mode of FIG. 2.

### [Mode for Invention]

Hereinafter, embodiments disclosed in the specification are described in detail with reference to the accompanying drawings, the same or similar components are denoted by the same or similar reference numerals, and an overlapping description thereof is omitted. Terms "module" and/or "unit" for components described in the following description are used only to make the specification easily understood. Therefore, these terms do not have meanings or roles distinguished from each other in themselves. Further, in describing the embodiments of the present disclosure, omitted is a detailed description of a case where it is decided that the detailed description of the known art related to the present disclosure may obscure the gist. Furthermore, it is to be understood that the accompanying drawings are provided only to allow the embodiments of the present disclosure to be easily understood, and the spirit of the present disclosure is not limited by the accompanying drawings and includes all the modifications, equivalents and substitutions included in the spirit and scope of the present disclosure.

Terms including ordinal numbers such as "first", "second", and the like, may be used to describe various components. However, these components are not limited by these terms. These terms are used only to distinguish one component from another component.

It is to be understood that when one component is referred to as being "connected to" or "coupled to" another component, one component may be directly connected or coupled to another component, or may be connected or coupled to another component while having a third component interposed therebetween. On the other hand, it is to be understood that when referred to as being "directly connected to" or "directly coupled to" another element, one element may be connected to or coupled to another element without a third element interposed therebetween.

It is to be understood that terms "include", "have" and the like used in the present application specify the presence of features, numerals, steps, operations, components, parts or combinations thereof, mentioned in the specification, and do not preclude the presence or possible addition of one or more other features, numerals, steps, operations, components, parts or combinations thereof.

FIG. 1 is a block diagram explaining a battery system according to an embodiment.

As shown in FIG. 1, a battery system 1 may include a battery 2, a battery management system (BMS) 3, a relay 11, and a current sensor 12.

The battery 2 may supply necessary power by connecting a plurality of battery cells in series/parallel with each other. FIG. 1 shows that the battery 2 includes a plurality of battery cells Cell1 to Celln connected in series with each other, the battery 2 is connected between two output terminals OUT1 and OUT2 of the battery system 1, the relay 11 is connected between a positive electrode of the battery system 1 and the output terminal OUT1, and the current sensor 12 is connected between a negative electrode of the battery system 1 and the output terminal OUT2. The components and a connection relationship between the components, shown in FIG. 1, are examples, and the present disclosure is not limited thereto.

The relay 11 may control electrical connection between the battery system 1 and an external device. When the relay 11 is turned on, the battery system 1 and the external device may be electrically connected to each other to thus perform the charging or discharging of the battery, and when the relay 11 is turned off, the battery system 1 and the external device may be electrically disconnected from each other. The external device may be a load or a charger.

The current sensor 12 may be connected in series to a current path between the battery 2 and the external device. The current sensor 12 may measure a current flowing through the battery 2, that is, a charging current or a discharging current, and transmit a measurement result to the BMS 3.

The BMS 3 may include a cell balancing circuit 10, a monitoring unit 20, a communication unit 30, and a control unit 40.

The cell balancing circuit 10 may include a plurality of switches SW1 to SWn and a plurality of resistors R1 to Rn. Each of the plurality of switches SW1 to SWn may perform a switching operation based on a corresponding switching signal among the plurality of switching signals SC[1] to SC[n] supplied from the monitoring unit 20. The switch SWi and the resistor Ri corresponding to each of the plurality of battery cells Cell1 to Celln may be connected in series with each other between the positive and negative electrodes of the corresponding cell Celli. When the switch SWi is turned on, a discharge path may be formed between the corresponding cell Celli, the switch SWi, and the resistor Ri, and the corresponding cell Celli may be discharged. Here, i is one of natural numbers from 1 to n.

The monitoring unit 20 may be electrically connected to the positive and negative electrodes of each of the plurality of battery cells Cell1 to Celln, and measure a cell voltage. A current value (hereinafter, a battery current value) measured by the current sensor 12 may be transmitted to the monitoring unit 20. The monitoring unit 20 may transmit information on the measured cell voltage and battery current to the control unit 40. In detail, the monitoring unit 20 may measure the cell voltage of each of the plurality of battery cells Cell1 to Celln at every predetermined cycle during a rest period when the charging or the discharging does not occur, and transmit the measured cell voltage to the control unit 40.

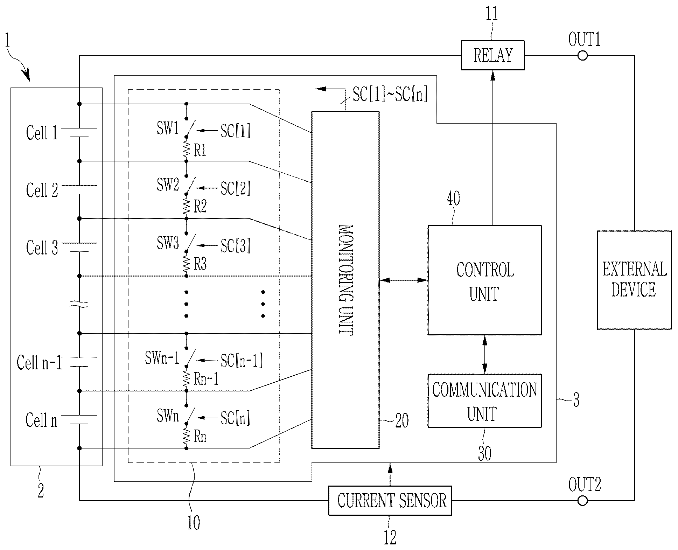

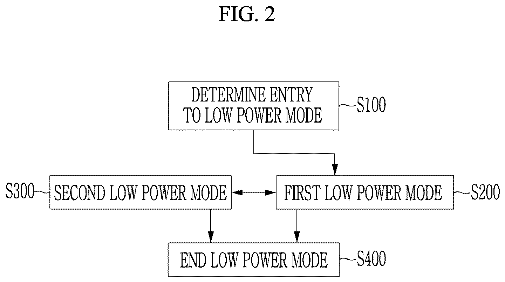

In some embodiments, the monitoring unit 20 may wake up at every predetermined cycle and perform the cell balancing even in a sleep mode where the BMS 3 performs no predetermined operation, or a shut down mode where the control unit 40 receives no drive power. Hereinafter, this configuration is described in more detail with reference to FIGS. 2 to 4.

The communication unit 30 may communicate with an upper system mounted with the battery system 1 to transmit battery data or receive a control signal from the upper system.

The control unit 40 may control the cell balancing circuit 10 to perform the cell balancing while the upper system (not shown) mounted with the battery system 1 is operated. In some embodiments, the control unit 40 may transmit a short cycle, a first cell balancing performance condition, a long cycle, and a second cell balancing performance condition to the monitoring unit 20 to instruct its entry to a first low power mode, and then enter the sleep mode or the shut down mode when a condition for entering a low power mode is satisfied. Hereinafter, this configuration is described in more detail with reference to FIGS. 2 to 4.

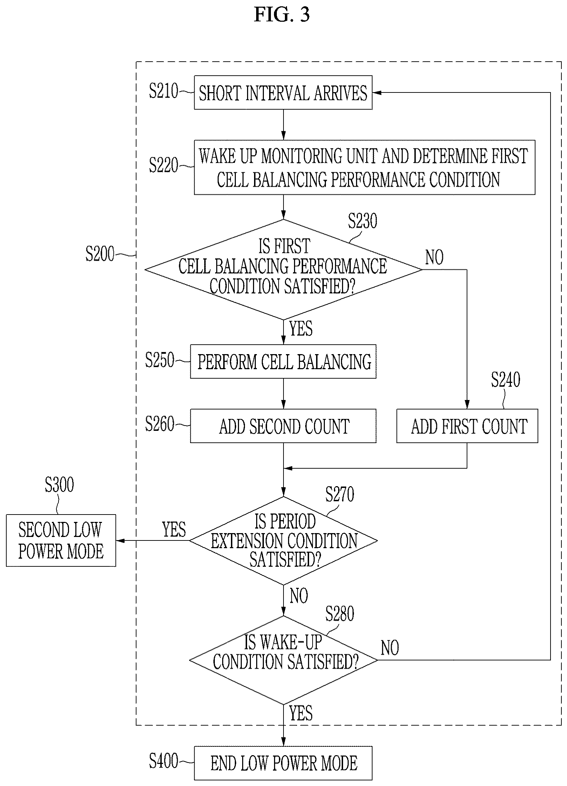

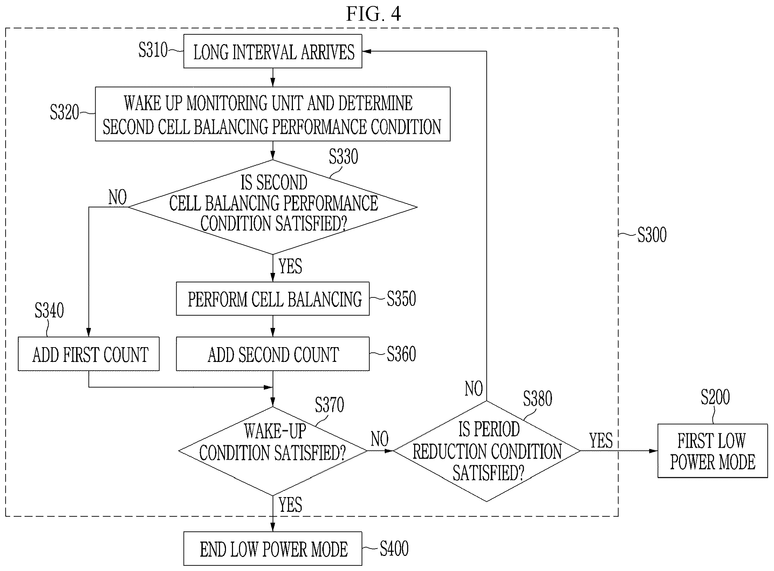

FIG. 2 is a flowchart explaining a cell balancing method according to another embodiment; FIG. 3 is a flowchart specifically explaining a first low power mode of FIG. 2; and FIG. 4 is a flowchart specifically explaining a second low power mode of FIG. 2.

Referring to FIG. 2, a control unit 40 may determine entry to the low power mode (S100) when a condition for entering a low power mode is satisfied.

The condition for entering the low power mode may include entry to a charge mode where a battery 2 is charged with power from an external device and entry to an operation stop mode where an operation of an upper system mounted with the battery 2 is stopped.

The low power mode may be a mode where a monitoring unit 20 wakes up at every short cycle or long cycle and performs cell balancing when each device in a battery management system (BMS) 3 is in a sleep mode or a shut down mode. That is, in the low power mode, the other components in the BMS 3 may maintain the sleep mode or the shut down mode, and the monitoring unit 20 may wake up at every predetermined cycle and perform the cell balancing.

For example, in the low power mode, the monitoring unit 20 may initially wake up at every short cycle and perform the cell balancing, and wake up at every long cycle and perform the cell balancing when a voltage difference between a plurality of battery cells is not great. In this way, it is possible to save power consumption required to perform the cell balancing. Here, the first low power mode may be a mode where the monitoring unit 20 wakes up at every short cycle and performs the cell balancing, and the second low power mode may be a mode where the monitoring unit 20 wakes up at every long cycle and performs the cell balancing.

The control unit 40 may instruct the monitoring unit 20 to enter the first low power mode and then automatically enter the sleep mode where no predetermined operation is performed or the shut down mode where supply of drive power is cut off when the condition for entering the low power mode is satisfied. In some embodiments, the control unit 40 may transmit the short cycle, a first cell balancing performance condition, the long cycle, and a second cell balancing performance condition to the monitoring unit 20 to instruct its entry to the first low power mode, and then enter the sleep mode or the shut down mode.

Next, the monitoring unit 20 may perform the first low power mode (S200).

In the first low power mode, the monitoring unit 20 may wake up at every short cycle and perform the cell balancing for each of a plurality of battery cells Cell1 to Celln based on the first cell balancing performance condition.

Referring to FIG. 3, in the step S200, the monitoring unit 20 may wake up and determine whether the first cell balancing performance condition is satisfied when the short cycle arrives (S210 and S220).

For example, the first cell balancing performance condition may include a case where a cell voltage difference between the plurality of battery cells Cell1 to Celln is 0.5 V or more. However, the first cell balancing performance condition is not limited thereto, and may include various cell balancing performance conditions.

In the step S200, the monitoring unit 20 may add a first count without performing the cell balancing (S240) when the first cell balancing performance condition is not satisfied as a determination result (No in S230).

In the step S200, the monitoring unit 20 may perform the cell balancing and add a second count (S250 and S260) when the first cell balancing performance condition is satisfied as the determination result (Yes in S230).

The first count may correspond to the number of times the balancing is not performed. The second count may correspond to the number of times the balancing is performed. In detail, after the short cycle or the long cycle described below arrives, the monitoring unit 20 may add the first count when the cell balancing is not performed, and add the second count when the cell balancing is performed.

The cell balancing may be performed only for the battery cell determined to require the cell balancing among the plurality of battery cells Cell1 to Celln. For example, the monitoring unit 20 may perform the cell balancing and add the second count even when the cell balancing is required for only one battery cell among the plurality of battery cells. For another example, the monitoring unit 20 may add the first count without performing the cell balancing when the cell balancing is required for none of the plurality of battery cells Cell1 to Celln.

In the step S200, the monitoring unit 20 may determine whether a period extension condition is satisfied (S270).

The period extension condition may be a condition where the accumulated count of the first counts is more than a first reference value. For example, assume that 100 is the accumulated count of the first counts, which is the number of times the cell balancing is not performed. A case where the cell balancing is not performed every time the short cycles of 100 times arrive may indicate that the voltage difference between the plurality of battery cells Cell1 to Celln is not great. The monitoring unit 20 may then wake up by determining whether the cell balancing is performed at the long cycle that is longer than the short cycle by a predetermined period, thereby saving the power consumption used to determine whether the cell balancing is performed.

In the step S200, the monitoring unit 20 may determine whether a wakeup condition of the control unit 40 in the sleep mode or the shut down mode is satisfied (S280) when the period extension condition is not satisfied as the determination result (No in S270).

The wake-up condition of the control unit 40 may include at least one of a first condition where a cell voltage of at least one battery cell among the plurality of battery cells Cell1 to Celln falls to a discharge lower limit voltage or less and a second condition where the accumulated count of the second counts is more than a second reference value. Here, the discharge lower limit voltage (or a cut-off voltage) may be a minimum cell voltage where stability of the battery cell is guaranteed.

In the step S200, the monitoring unit 20 may go back to the sleep mode when the wake-up condition is not satisfied as the determination result (No in S280). The method may then start again from the step S210.

In the step S200, the monitoring unit 20 may wake up the control unit 40 in the sleep mode or the shut down mode to end the first low power mode (S400) when the wake-up condition is satisfied as the determination result (Yes in S280).

In some embodiments, the control unit 40 may instruct the entire BMS 3 to wake up from the sleep mode when the control unit 40 wakes up. For example, it may be difficult for the monitoring unit 20 to solve this voltage problem in the first condition where the cell voltage of at least one battery cell among the plurality of battery cells Cell1 to Celln falls to the discharge lower limit voltage or less. Accordingly, the control unit 40 may need to wake up to monitor an overall state of the battery 2 and take practical measures to deal with the battery cell whose voltage falls to the discharge lower limit voltage or less. For another example, the second condition where the accumulated count of the second counts, which is the number of times the cell balancing is performed, is more than the second reference value may indicate that the cell balancing is performed a large number of times. The fact that the cell balancing is frequently performed may indicate that the voltage difference between the plurality of battery cells Cell1 to Celln does not get smaller. In this case, the control unit 40 may wake up to monitor the overall state of the battery 2, and control the cell balancing for the plurality of battery cells Cell1 to Celln through the monitoring unit 20 based on a monitoring result.

In the step S200, the monitoring unit 20 may enter the performing of the second low power mode (S300) when the period extension condition is satisfied as the determine result (Yes in S270).

Next, the monitoring unit 20 may perform the second low power mode (S300).

In the second low power mode, the monitoring unit 20 may wake up at every long cycle and perform the cell balancing for each of the plurality of battery cells Cell1 to Celln based on the second cell balancing performance condition. For example, the long cycle may be about 2 seconds when the short cycle is 1 second. However, the cycle is not limited thereto, and the short cycle or the long cycle may be determined to be various cycles.

Referring to FIG 4, in the step S300, the monitoring unit 20 may wake up to determine whether the second cell balancing performance condition is satisfied when the long cycle arrives (S310 and S320).

For example, the first cell balancing performance condition may include the case where the cell voltage difference between the plurality of battery cells is 0.5 V or more, and the second cell balancing performance condition may include a case where the cell voltage difference between the plurality of battery cells is 0.4 V or more. In detail, a reference for the cell balancing performance condition may be raised instead of determining whether the cell balancing is performed at the long cycle. In this case, it is possible to prevent the voltage difference between the plurality of battery cells Cell1 to Celln from being greater instead of saving the power consumption by a low power mode operation at the short cycle or the long cycle. However, the cell balancing performance condition is not limited thereto, and the first cell balancing performance condition or the second cell balancing performance condition may be set in various ways.

In the step S300, the monitoring unit 20 may add the first count without performing the cell balancing (S340) when the second cell balancing performance condition is not satisfied as the determination result (No in S330).

In the step S300, the monitoring unit 20 may perform the cell balancing and add the second count (S350 and S360) when the second cell balancing performance condition is satisfied as the determination result (Yes in S330).

The first count may correspond to the number of times the balancing is not performed. The second count may correspond to the number of times the balancing is performed. In detail, after the short cycle or the long cycle arrives, the monitoring unit 20 may add the first count when the cell balancing is not performed, and add the second count when the cell balancing is performed.

The cell balancing may be performed only for the battery cell determined to require the cell balancing among the plurality of battery cells Cell1 to Celln. For example, the monitoring unit 20 may perform the cell balancing and add the second count even when the cell balancing is required for only one battery cell among the plurality of battery cells. For another example, the monitoring unit 20 may add the first count without performing the cell balancing when the cell balancing is required for none of the plurality of battery cells Cell1 to Celln.

In the step S300, the monitoring unit 20 may determine whether the wakeup condition of the control unit 40 in the sleep mode or the shut down mode is satisfied (S370).

The wake-up condition of the control unit 40 may include at least one of the first condition where the cell voltage of at least one battery cell among the plurality of battery cells falls to the discharge lower limit voltage or less, and the second condition where the accumulated count of the second counts is more than the second reference value. Here, the discharge lower limit voltage (or the cut-off voltage) may be the minimum cell voltage where the stability of the battery cell is guaranteed.

In the step S300, the monitoring unit 20 may wake up the control unit 40 in the sleep mode or the shut down mode, and end the second low power mode (S400) when the wake-up condition is satisfied as the determination result (Yes in S370).

In some embodiments, the control unit 40 may instruct the entire BMS 3 to wake up from the sleep mode when the control unit 40 wakes up. For example, it may be difficult for the monitoring unit 20 to solve this voltage problem in the first condition where the cell voltage of at least one battery cell among the plurality of battery cells Cell1 to Celln falls to the discharge lower limit voltage or less. Accordingly, the control unit 40 may need to wake up to monitor the overall state of the battery 2 and take the practical measures to deal with the battery cell whose voltage falls to the discharge lower limit voltage or less. For another example, the second condition where the accumulated count of the second counts, which is the number of times the cell balancing is performed, is more than the second reference value may indicate that the cell balancing is performed a large number of times. The fact that the cell balancing is frequently performed may indicate that the voltage difference between the plurality of battery cells Cell1 to Celln does not get smaller. In this case, the control unit 40 may wake up to monitor the overall state of the battery 2, and control the cell balancing for the plurality of battery cells Cell1 to Celln through the monitoring unit 20 based on the monitoring result.

In the step S300, the monitoring unit 20 may determine whether the period reduction condition is satisfied (S380) when the wake-up condition is not satisfied as the determination result (No in S370).

The period reduction condition may be a condition where the accumulated count of the first and second counts is more than a third reference value. For example, a case where the accumulated count of the first and second counts is great may indicate that the period of the second low power mode is long. The system may be set to enter the first low power mode again for its stability when a certain period is elapsed.

In the step S300, the monitoring unit 20 may go back to the sleep mode when the period reduction condition is not satisfied as the determination result (No in S380). The method may then start again from the step S310.

In the step S300, the monitoring unit 20 may enter the performing of the first low power mode (S200) when the period reduction condition is satisfied as the determination result (Yes in S380).

Although the embodiments of the present disclosure have been described in detail hereinabove, the scope of the present disclosure is not limited thereto. Various modifications and improvements made by those skilled in the art to which the present disclosure pertains also belong to the scope of the present disclosure.

## Claims

1. A battery system comprising:
a battery including a plurality of battery cells;
a monitoring unit waking up at every short cycle and performing a first low power mode where cell balancing is performed for each of the plurality of battery cells based on a predetermined first cell balancing performance condition, and waking up at every long cycle that is longer than the short cycle by a predetermined period and performing a second low power mode where the cell balancing is performed for each of the plurality of battery cells based on a second cell balancing performance condition when a period extension condition is satisfied; and
a control unit instructing the monitoring unit to enter the first low power mode, and then entering a sleep mode where no predetermined operation is performed when a condition for entering a low power mode including the first low power mode and the second low power mode is satisfied.

2. The battery system of claim 1, wherein
the monitoring unit accumulates
a first count without performing the cell balancing for the plurality of battery cells when the first cell balancing performance condition or the second cell balancing performance condition is not satisfied, and
performs the cell balancing for the battery cell requiring the cell balancing among the plurality of battery cells and accumulates a second count when the first cell balancing performance condition or the second cell balancing performance condition is satisfied.

3. The battery system of claim 2, wherein
the period extension condition is
a condition where the accumulated count of the first counts is more than a first reference value.

4. The battery system of claim 1, wherein
the condition for entering the low power mode includes
at least one of entry to a charge mode where the battery is charged with power from an external device and entry to an operation stop mode where an operation of an upper system mounted with the battery is stopped.

5. The battery system of claim 4, wherein
the control unit transmits
the short cycle, the first cell balancing performance condition, the long cycle, and the second cell balancing performance condition to the monitoring unit to instruct its entry to the first low power mode, and then enters the sleep mode or a shut down mode where the control unit receives no drive power when the condition for entering the low power mode is satisfied.

6. The battery system of claim 2, wherein
the monitoring unit wakes up
the control unit and ends the first low power mode or the second low power mode when at least one of a first condition where a cell voltage of at least one battery cell among the plurality of battery cells falls to a discharge lower limit voltage or less and a second condition where the accumulated count of the second counts is more than a predetermined second reference value is satisfied.

7. The battery system of claim 2, wherein
the monitoring unit
changes from the second low power mode to the first low power mode when a period reduction condition where the accumulated count of the first and second counts is more than a third reference value is satisfied.

8. A cell balancing method comprising:
receiving an instruction for entry to a first low power mode from a control unit before the control unit enters a sleep mode where the control unit performs no predetermined operation when a condition for entering a low power mode is satisfied;
waking up at every short cycle and performing a first low power mode where cell balancing is performed for each of a plurality of battery cells based on a first cell balancing performance condition; and
waking up at every long cycle that is longer than the short cycle by a predetermined period and performing a second low power mode where the cell balancing is performed for each of the plurality of battery cells based on a second cell balancing performance condition when a period extension condition is satisfied.

9. The cell balancing method of claim 8, wherein
the performing of the first low power mode includes:
waking up a monitoring unit and determining whether the first cell balancing performance condition is satisfied when the short cycle arrives;
adding a first count corresponding to the number of times the cell balancing is not performed when the first cell balancing performance condition is not satisfied as a determination result;
performing the cell balancing for the battery cell requiring the cell balancing among the plurality of battery cells and adding a second count corresponding to the number of times the cell balancing is performed when the first cell balancing performance condition is satisfied as the determination result; and
determining whether the period extension condition, which is a condition where the accumulated count of the first counts is more than a first reference value, is satisfied, and
entering the performing of the second low power mode when the period extension condition is satisfied as the determination result.

10. The cell balancing method of claim 9,
when the period extension condition is not satisfied as the determination result, further comprising:
determining whether at least one of a first condition where a cell voltage of at least one battery cell among the plurality of battery cells falls to a discharge lower limit voltage or less and a second condition where the accumulated count of the second counts is more than a second reference value is satisfied; and
waking up the control unit and ending the first low power mode when at least one of the first condition and the second condition is satisfied as the determination result.

11. The cell balancing method of claim 9, wherein
the performing of the second low power mode includes:
waking up the monitoring unit and determining whether the second cell balancing performance condition is satisfied when the long cycle arrives;
adding the first count when the second cell balancing performance condition is not satisfied as the determination result;
performing the cell balancing for the battery cell requiring the cell balancing among the plurality of battery cells and adding the second count when the second cell balancing performance condition is satisfied as the determination result; and
determining whether a period reduction condition where the total accumulated count of the first and second counts is more than a third reference value is satisfied, and
entering the step of performing of the first low power mode when the period reduction condition is satisfied as the determination result.

12. Thecell balancing method of claim 9,
before the determining of whether the period reduction condition is satisfied, further comprising:
determining whether at least one of a first condition where a cell voltage of at least one battery cell among the plurality of battery cells falls to a discharge lower limit voltage or less and a second condition where the accumulated count of the second counts is more than a predetermined second reference value is satisfied; and
waking up the control unit and ending the second low power mode when at least one of the first condition and the second condition is satisfied as the determination result.

13. The cell balancing method of claim 9, wherein
the condition for entering the low power mode includes
at least one of entry to a charge mode where the battery is charged with power from an external device and entry to an operation stop mode where an operation of an upper system mounted with the battery is stopped.
